# EUROPÄISCHE PATENTSCHRIFT

(11) **EP 1 894 284 B1**
(45) Veröffentlichungstag und Bekanntmachung des Hinweises auf die Patenterteilung: **02.11.2011**
(21) Anmeldenummer: 06763650.6
(22) Anmeldetag: 13.06.2006
(51) Int. Cl.: H02H 7/08, H02P 29/02

(54) **VERFAHREN UND ANORDNUNG ZUR ÜBERWACHUNG VON SIGNALEN**
METHOD AND ARRANGEMENT FOR MONITORING SIGNALS
PROCEDE ET SYSTEME DE SURVEILLANCE DE SIGNAUX

(30) Priorität: 20.06.2005 DE 102005028477
(43) Veröffentlichungstag der Anmeldung: 05.03.2008
(73) Patentinhaber: Continental Automotive GmbH, 30165 Hannover (DE)
(72) Erfinder: BAY, Wolfgang, 65936 Frankfurt/Main (DE); HENNINGER, Michael, 65779 Kelkheim (DE); KRETSCHMAR, Sven, 65462 Gustavsburg (DE)
(86) Internationale Anmeldenummer: PCT/EP2006/063113
(87) Internationale Veröffentlichungsnummer: WO 2006/136507

(56) Entgegenhaltungen:
- WO-A1-2004/105206
- JP-A- 7 322 643
- JP-A- 2001 309 669

## Beschreibung

Die Erfindung betrifft ein Verfahren und eine Anordnung zur Überwachung von Signalen, die von einer Endstufe einem mehrphasigen Motor zugeführt werden und deren Pulsbreite von einem Controller gesteuert wird, wobei die Summe der Pulsbreiten der Signale je Phase mit je einem Zähler jeweils für eine vorgegebene vom Programmablauf im Controller unabhängige Zeit gemessen wird, und wobei ein Fehlersignal erzeugt wird, wenn die Gesamtzeit außerhalb eines vorgegebenen Toleranzbereichs liegt.

Insbesondere für sicherheitsrelevante Anwendungen in Kraftfahrzeugen, beispielsweise für eine elektrisch unterstützte Lenkung, ist es erforderlich, jeden Fehler, der zu einem gefährlichen Zustand führen kann, zu erkennen. Im Falle elektrisch unterstützter Lenkanlagen werden zur Erzeugung der Unterstützung DC- oder EC-Motoren eingesetzt, die über eine H-Brücke bzw. eine B6-Brücke durch Anlegen von pulsbreitenmodulierten Signalen an die Halbbrücken gesteuert werden. Die Halbleiterschaltelemente, meist MOSFETs, werden von einer Steuereinrichtung (Mikrocontroller oder digitaler Signalprozessor) angesteuert. Zur Fehlererkennung ist eine durchgängige Überwachung der am Ausgang anliegenden Effektivspannungen erforderlich.

Aus WO 2004/105206 A1 sind ein Verfahren und eine Anordnung zur Überwachung einer Leistungsendstufe bekannt geworden, wobei die jeweilige Pulsbreite vom am Ausgang anstehenden Signalen mit einer jeweiligen Soll-Pulsbreite verglichen wird und die Leistungsendstufe als fehlerfrei erkannt wird, wenn Abweichungen nicht über ein vorgegebenes Maß hinausgehen. Dabei erfolgen die Messung der Pulsbreiten sowie der Vergleich mit Hilfe einer Steuereinrichtung, die auch die Ableitung der Steuersignale für die Endstufe durchführt und in der Regel von einem Controller gebildet wird. Die dazu erforderliche Synchronität zwischen der Überwachung der Ausgangsstufe und der Pulsbreitenmodulation ist jedoch bei derartigen Controllern nicht gewährleistet, insbesondere wenn eine hohe Auslastung vorliegt, beispielsweise durch hohes Interrupt-Aufkommen.

Ein Verfahren der eingangs genannten Art ist aus der JP 07 322643 A bekannt.

Aufgabe der vorliegenden Erfindung ist es, eine Überwachung von Signalen auch dann zuverlässig zu gewährleisten, wenn zur Erzeugung der Steuersignale ein Controller hoch ausgelastet ist.

Diese Aufgabe wird bei dem erfindungsgemäßen Verfahren dadurch gelöst, dass der Zählerstand nach der vorgegebenen Zeit aus dem Zähler ausgelesen wird und die Signale zur Messung der Pulsbreiten mit einem Torimpuls verknüpft und dem Zähler zugeführt werden, der mit einer wesentlich höheren Frequenz als die Frequenz der Signale getaktet wird, und dass der Torimpuls von einem Zeitgeber erzeugt wird, der vom Controller die vorgegebene Zeit als Zahlenwert empfängt oder dass der Zählerstand nach der vorgegebenen Zeit aus dem Zähler ausgelesen wird und die Signale je einem Zähler zugeführt werden und dass die Zähler während der Dauer eines Torimpulses freigegeben werden, der von einem Zeitgeber erzeugt wird.

Zur Berücksichtigung der Pulsbreitenmodulation der Signale kann bei dem erfindungsgemäßen Verfahren ferner vorgesehen sein, dass der vorgegebene Toleranzbereich von der Pulsbreite abhängt, die vom Controller vorgegeben wird. Die Auswirkungen von Lauf- bzw. Schaltzeiten der Signale im Bereich der Endstufe können dadurch verringert werden, dass bei der Abhängigkeit des Toleranzbereichs von der vorgegebenen Pulsbreite Änderungen der Pulsbreite von der Steuerschaltung bis zum Motor berücksichtigt werden.

Bei dem erfindungsgemäßen Verfahren kann vorgesehen sein, dass die vorgegebene Zeit vom Controller vorgegeben wird. Dadurch kann die vorgegebene Zeit bezüglich verschiedener Betriebszustände oder anderer Umstände optimiert werden.

Das erfindungsgemäße Verfahren kann derart ausgebildet sein, dass der Torimpuls asynchron zu den Impulsen ist und eine Länge von einem ganzzahligen Vielfachen der Periodendauer der Impulse aufweist oder dass der Torimpuls synchron mit den Impulsen ist und eine Länge von mehreren Periodendauern der Impulse aufweist.

Bei einer erfindungsgemäßen Anordnung zur Überwachung von Signalen, die von einer Endstufe einem mehrphasigen Motor zugeführt werden und deren Pulsbreite von einem Controller gesteuert wird, wobei je Phase ein getakteter Zähler vorgesehen ist, welcher die Summe der Pulsbreiten der Signale innerhalb einer vorgegebenen, vom Programmablauf im Controller unabhängigen Zeit misst, und ferner Mittel vorgesehen sind, welche den Zählerstand der Zähler nach der vorgegebenen Zeit auslesen und ein Fehlersignal erzeugen, wenn der Zählerstand außerhalb eines vorgegebenen Toleranzbereichs liegt, wird die Aufgabe dadurch gelöst, dass die Signale einer Phase über jeweils eine Torschaltung jeweils einem Zähler zuführbar sind, wobei die Torschaltung mit einem von einem Zeitgeber erzeugten Torimpuls gesteuert wird, dessen Breite der vorgegebenen Zeit entspricht, und dass die Zähler mit einer höheren Frequenz als der Frequenz der Signale getaktet werden und mit den die Torschaltungen durchlaufenen Signalen freigegeben werden oder dass Eingänge der Zähler mit den Signalen beaufschlagt sind, dass ein Zeitgeber zur Erzeugung eines Torimpulses vorgesehen ist, dessen Breite der vorgegebenen Zeit entspricht, und dass der Torimpuls weiteren Eingängen der Zähler zum Freigeben der Zähler zuführbar ist.

Ferner kann die erfindungsgemäße Anordnung derart ausgebildet sein, dass die Zähler und der Zeitgeber mit dem Controller einen integrierten Schaltkreis bilden.

Bei einer vorteilhaften Ausgestaltung ist vorgesehen, dass die Zähler Hardware-Zähler sind und der Zeitgeber einen Hardware-Zähler enthält. Es kann jedoch auch vorgesehen sein, dass die Zähler und der Zeitgeber von einer programmierbaren Einrichtung oder von einem maskenprogrammierten Schaltkreis gebildet werden.

An sich wird bei der Erfindung davon ausgegangen, dass der Zählerstand mit dem Toleranzbereich im Controller verglichen wird. Es ist bei der Erfindung jedoch auch möglich, dass außerhalb des Controllers ein Komparator vorgesehen ist, der den Zählerstand nach der vorgegebenen Zeit mit einem vom Controller zugeführten Toleranzbereich vergleicht und bei einer Abweichung ein Fehlersignal zum Controller überträgt.

Die Erfindung lässt zahlreiche Ausführungsformen zu. Vier davon sind schematisch in der Zeichnung anhand mehrerer Figuren dargestellt und nachfolgend beschrieben. Es zeigt:
- Fig. 1: ein Blockschaltbild eines ersten Ausführungsbeispiels,
- Fig. 2: Zeitdiagramme von bei der Erfindung auftretenden Signalen,
- Fig. 3: ein Blockschaltbild eines zweiten Ausführungsbeispiels,
- Fig. 4: ein Blockschaltbild eines dritten Ausführungsbeispiels und
- Fig. 5: ein Blockschaltbild eines vierten Ausführungsbeispiels.

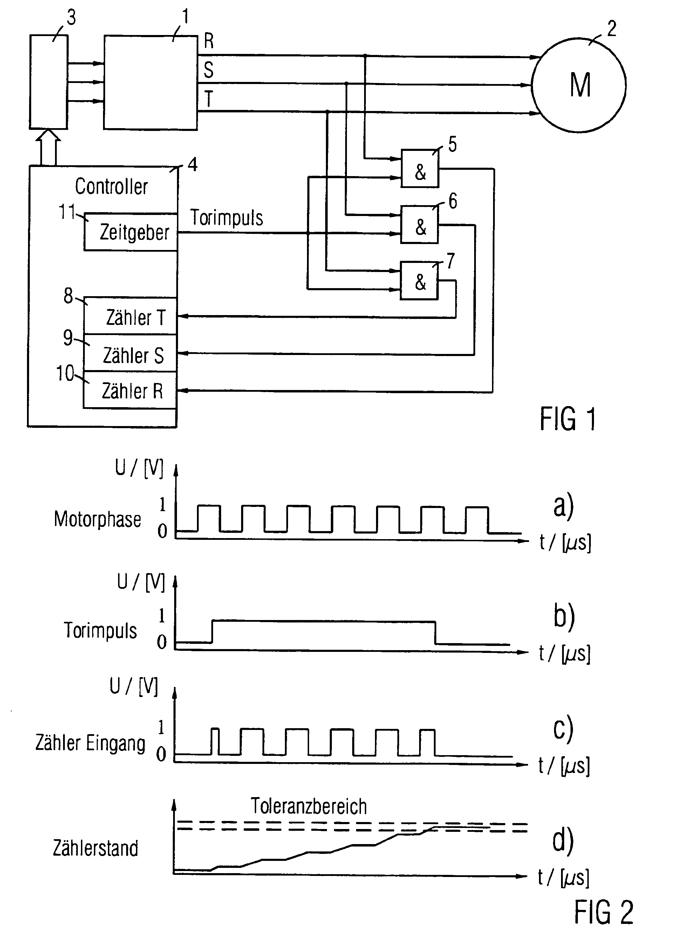

Bei dem Ausführungsbeispiel nach Fig. 1 sind Ausgänge einer dreiphasigen Endstufe 1 mit Wicklungen eines Motors 2 verbunden. Die Endstufe wird über eine Ansteuerstufe 3 von einem Controller 4 gesteuert. Der Controller 4 ist je nach Anwendung der erfindungsgemäßen Anordnung mit nicht dargestellten Sensoren verbunden, beispielsweise mit einem Sensor, der die Stellung des Lenkrades misst und aus den Sensoreingaben die erforderliche Steuerung des Motors 2 berechnet.

Zu Überwachungszwecken werden die Signale in jeder der drei Phasen R, S, T über Und-Gatter 5, 6, 7 je einem Hardware-Zähler 8, 9, 10 zugeführt - im folgenden auch Zähler genannt. Die Zähler zählen die Taktimpulse, deren Frequenz wesentlich höher ist als diejenige der zu messenden Signale, während einer vorgegebenen Zeit, welche ein weiterer Hardware-Zähler 11 als Torimpuls den Und-Gattern 5 bis 7 zuführt. Die Zähler 8, 9, 10 - meist auch als Timer bezeichnet - zählen Taktimpulse, während die zugeführten Signale den in Fig. 2a) mit 1 bezeichneten logischen Pegel einnehmen.

In den Figuren 2a) und 2b) sind die Signale an jeweils einer Motorphase und der Torimpuls dargestellt. Durch die Verknüpfung in den Und-Gattern 5 bis 7 entstehen die in Fig. 2c) dargestellten Signale, die dann dem jeweiligen Zähler 8, 9, 10 zugeführt werden. Bei dem in Fig. 2d) gezeigten einwandfreien Verlauf der Signale erreicht der Zählerstand einen Wert innerhalb eines Toleranzbereichs, der in Fig. 2d) gestrichelt dargestellt ist. Erreicht der Zählerstand diesen Toleranzbereich nicht oder geht darüber hinaus, wird eine Fehlermeldung ausgegeben.

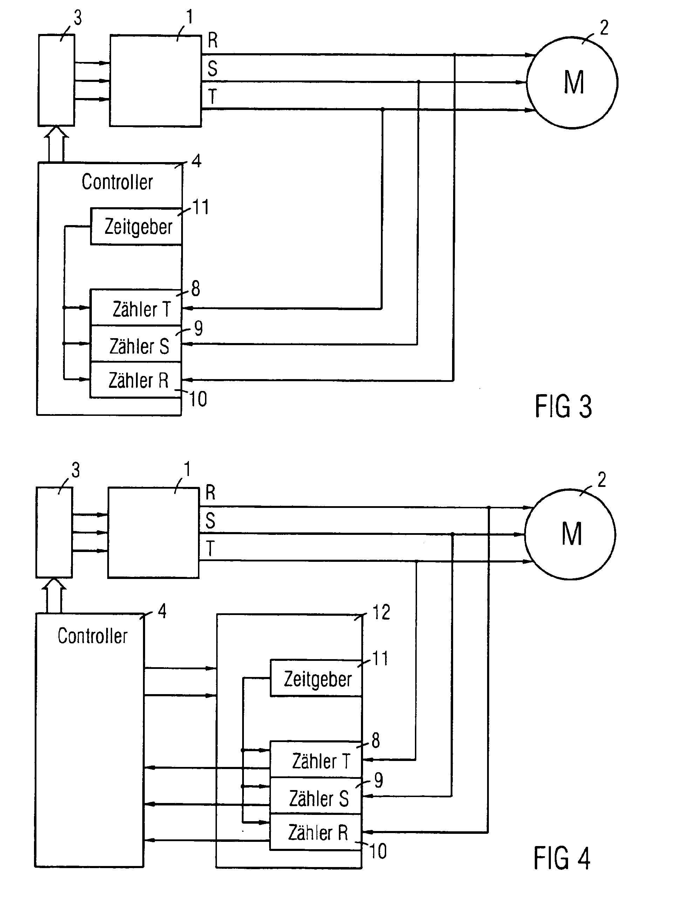

Bei dem in Fig. 3 dargestellten Ausführungsbeispiel werden die zu überwachenden Signale direkt den Zählern 8, 9, 10 zugeführt. Der von dem weiteren Zähler 11 erzeugte Torimpuls wird den Zählern 8, 9, 10 zugeleitet, wodurch die Zähler 8, 9, 10 nur während der Dauer des Torimpulses freigegeben werden.

Bei dem Ausführungsbeispiel nach Fig. 4 sind der Zeitgeber 11 und die Zähler 8, 9, 10 in einer separaten Schaltung 12 entweder in Form eines Prozessors oder eines ASICs realisiert. Von dem Controller 4 wird der Zeitgeber 11 auf die vorgegebene Zeit gesetzt. Frühestens nach Ablauf der vorgegebenen Zeit wird vom Controller 4 ein Kommando zum Auslesen der Zählerstände gegeben, worauf diese zum Controller 4 übertragen werden.

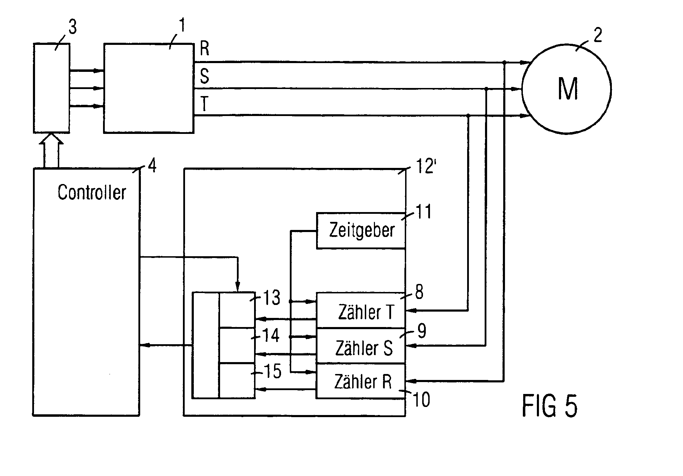

Bei dem Ausführungsbeispiel nach Fig. 5 ist in der Schaltung 12' noch jeweils ein Komparator 13, 14, 15 für die Zähler 8, 9, 10 angeordnet. Vom Controller 4 wird dann zur Schaltung 12' lediglich der Toleranzbereich in die Komparatoren 13, 14, 15 eingeschrieben. Gerät der Zählerstand außerhalb des Toleranzbereichs, wird von dem betreffenden Komparator 13, 14, 15 ein Fehlersignal ausgegeben.

## Patentansprüche

1. Verfahren zur Überwachung von Signalen, die von einer Endstufe einem mehrphasigen Motor zugeführt werden und deren Pulsbreite von einem Controller gesteuert wird, wobei die Summe der Pulsbreiten der Signale je Phase mit je einem Zähler jeweils für eine vorgegebene vom Programmablauf im Controller unabhängige Zeit gemessen wird, und wobei ein Fehlersignal erzeugt wird, wenn die Gesamtzeit außerhalb eines vorgegebenen Toleranzbereichs liegt, **dadurch gekennzeichnet, dass** der Zählerstand nach der vorgegebenen Zeit aus dem Zähler ausgelesen wird und die Signale zur Messung der Pulsbreiten mit einem Torimpuls verknüpft und dem Zähler zugeführt werden, der mit einer wesentlich höheren Frequenz als die Frequenz der Signale getaktet wird, und dass der Torimpuls von einem Zeitgeber erzeugt wird, der vom Controller die vorgegebene Zeit als Zahlenwert empfängt oder dass der Zählerstand nach der vorgegebenen Zeit aus dem Zähler ausgelesen wird und die Signale je einem Zähler zugeführt werden und dass die Zähler während der Dauer eines Torimpulses freigegeben werden, der von einem Zeitgeber erzeugt wird.

2. Verfahren nach Anspruch 1, **dadurch gekennzeichnet, dass** der vorgegebene Toleranzbereich von der Pulsbreite abhängt, die vom Controller vorgegeben wird.

3. Verfahren nach Anspruch 2, **dadurch gekennzeichnet, dass** bei der Abhängigkeit des Toleranzbereichs von der vorgegebenen Pulsbreite Änderungen der Pulsbreite von der Steuerschaltung bis zum Motor berücksichtigt werden.

4. Verfahren nach einem der vorhergehenden Ansprüche, **dadurch gekennzeichnet, dass** die vorgegebene Zeit vom Controller vorgegeben wird.

5. Verfahren nach einem der vorhergehenden Ansprüche, **dadurch gekennzeichnet, dass** der Torimpuls asynchron zu den Impulsen ist und eine Länge von einem ganzzahligen Vielfachen der Periodendauer der Impulse aufweist.

6. Verfahren nach einem der Ansprüche 1 bis 4, **dadurch gekennzeichnet, dass** der Torimpuls synchron mit den Impulsen ist und eine Länge von mehreren Periodendauern der Impulse aufweist.

7. Anordnung zur Überwachung von Signalen, die von einer Endstufe (1) einem mehrphasigen Motor (2) zugeführt werden und deren Pulsbreite von einem Controller gesteuert wird, wobei je Phase ein getakteter Zähler (8, 9, 10) vorgesehen ist, welcher die Summe der Pulsbreiten der Signale innerhalb einer vorgegebenen, vom Programmablauf im Controller unabhängigen Zeit misst, und dass ferner Mittel vorgesehen sind, welche den Zählerstand der Zähler (8, 9, 10) nach der vorgegebenen Zeit auslesen und ein Fehlersignal erzeugen, wenn der Zählerstand außerhalb eines vorgegebenen Toleranzbereichs liegt, **dadurch gekennzeichnet, dass** die Signale einer Phase über jeweils eine Torschaltung (5, 6, 7) jeweils einem Zähler (8, 9, 10) zuführbar sind, wobei die Torschaltung (5, 6, 7) mit einem von einem Zeitgeber (11) erzeugten Torimpuls gesteuert wird, dessen Breite der vorgegebenen Zeit entspricht, und dass die Zähler (8, 9, 10) mit einer höheren Frequenz als der Frequenz der Signale getaktet werden und mit den die Torschaltungen (5, 6, 7) durchlaufenen Signalen freigegeben werden oder daß Eingänge der Zähler (8, 9, 10) mit den Signalen beaufschlagt sind, dass ein Zeitgeber (11) zur Erzeugung eines Torimpulses vorgesehen ist, dessen Breite der vorgegebenen Zeit entspricht, und dass der Torimpuls weiteren Eingängen der Zähler (8, 9, 10) zum Freigeben der Zähler zuführbar ist.

8. Anordnung nach Anspruch 7, **dadurch gekennzeichnet, dass** die Zähler (8, 9, 10) und der Zeitgeber (11) mit dem Controller (4) einen integrierten Schaltkreis bilden.

9. Anordnung nach einem der Ansprüche 7 und 8, **dadurch gekennzeichnet, dass** die Zähler Hardware-Zähler (8, 9, 10) sind und der Zeitgeber (11) einen Hardware-Zähler enthält.

10. Anordnung nach einem der Ansprüche 7 und 8, **dadurch gekennzeichnet, dass** die Zähler und der Zeitgeber von einer programmierbaren Einrichtung gebildet werden.

11. Anordnung nach einem der Ansprüche 7 und 8, **dadurch gekennzeichnet, dass** die Zähler und der Zeitgeber von einem maskenprogrammierten Schaltkreis gebildet werden.

12. Anordnung nach einem der Ansprüche 7 bis 11, **dadurch gekennzeichnet, dass** außerhalb des Controllers ein Komparator vorgesehen ist, der den Zählerstand nach der vorgegebenen Zeit mit einem vom Controller zugeführten Toleranzbereich vergleicht und bei einer Abweichung ein Fehlersignal zum Controller überträgt.

## Claims

1. Method for monitoring signals which are supplied from an output stage to a multiphase motor and the pulse width of which is controlled by a controller, the sum of the pulse widths of the signals for each phase respectively being measured using a respective counter for a predefined amount of time that is independent of the program sequence in the controller, and a fault signal being generated if the total amount of time is outside a predefined tolerance range, **characterized in that** the counter reading is read from the counter after the predefined amount of time and, in order to measure the pulse widths, the signals are combined with a gate pulse and are supplied to the counter which is clocked at a considerably higher frequency than the frequency of the signals, and **in that** the gate pulse is generated by a timer which receives the predefined amount of time from the controller in the form of a numerical value, or in that the counter reading is read from the counter after the predefined amount of time and the signals are supplied to a respective counter, and **in that** the counters are enabled for the duration of a gate pulse which is generated by a timer.

2. Method according to Claim 1, **characterized in that** the predefined tolerance range depends on the pulse width predefined by the controller.

3. Method according to Claim 2, **characterized in that** changes in the pulse width from the control circuit to the motor are taken into account in the dependence of the tolerance range on the predefined pulse width.

4. Method according to one of the preceding claims, **characterized in that** the predefined amount of time is predefined by the controller.

5. Method according to one of the preceding claims, **characterized in that** the gate pulse is asynchronous with respect to the pulses and has a length of an integer multiple of the period duration of the pulses.

6. Method according to one of Claims 1 to 4, **characterized in that** the gate pulse is in synchronism with the pulses and has a length of a plurality of period durations of the pulses.

7. Arrangement for monitoring signals which are supplied from an output stage (1) to a multiphase motor (2) and the pulse width of which is controlled by a controller, a clocked counter (8, 9, 10) which measures the sum of the pulse widths of the signals inside a predefined amount of time that is independent of the program sequence in the controller being provided for each phase, and provision also being made of means which read the counter reading of the counters (8, 9, 10) after the predefined amount of time and generate a fault signal if the counter reading is outside a predefined tolerance range, **characterized in that** the signals of a phase can be supplied to a respective counter (8, 9, 10) via a respective gate circuit (5, 6, 7), the gate circuit (5, 6, 7) being controlled using a gate pulse which is generated by a timer (11) and the width of which corresponds to the predefined amount of time, and **in that** the counters (8, 9, 10) are clocked at a higher frequency than the frequency of the signals and are enabled using the signals which pass through the gate circuits (5, 6, 7), or **in that** the signals are applied to inputs of the counters (8, 9, 10), **in that** a timer (11) is provided for the purpose of generating a gate pulse whose width corresponds to the predefined amount of time, and **in that** the gate pulse can be supplied to further inputs of the counters (8, 9, 10) in order to enable the counters.

8. Arrangement according to Claim 7, **characterized in that** the counters (8, 9, 10) and the timer (11) form an integrated circuit with the controller (4).

9. Arrangement according to either of Claims 7 and 8, **characterized in that** the counters are hardware counters (8, 9, 10) and the timer (11) contains a hardware counter.

10. Arrangement according to either of Claims 7 and 8, **characterized in that** the counters and the timer are formed by a programmable device.

11. Arrangement according to either of Claims 7 and 8, **characterized in that** the counters and the timer are formed by a mask-programmed circuit.

12. Arrangement according to one of Claims 7 to 11, **characterized in that** a comparator which compares the counter reading with a tolerance range supplied by the controller after the predefined amount of time and transmits a fault signal to the controller in the event of a discrepancy is provided outside the controller.

## Revendications

1. Procédé de contrôle de signaux qui sont envoyés par un étage final d'un moteur polyphasé et dont la largeur d'impulsion est commandée par un dispositif de commande, dans lequel on mesure pendant une durée, prescrite et indépendante du déroulement du programme dans le dispositif de commande, la somme des largeurs d'impulsion des signaux par phase par respectivement un compteur et dans lequel on produit un signal d'erreur lorsque la durée totale est à l'extérieur d'une plage de tolérance prescrite, **caractérisé en ce qu'**on lit dans le compteur l'état du compteur après la durée prescrite et on combine les signaux pour la mesure des largeurs d'impulsion à une impulsion de porte et on les envoie au compteur qui est cadencé à une fréquence sensiblement plus haute que la fréquence des signaux, et **en ce que** l'on produit l'impulsion de porte par une horloge qui reçoit, par le dispositif de commande sous la forme d'une valeur de compteur, la durée prescrite ou **en ce qu'**on lit l'état du compteur après la durée prescrite et on envoie les signaux respectivement à un compteur et **en ce que** les compteurs libèrent pendant la durée une impulsion de porte, qui est produite par une horloge.

2. Procédé suivant la revendication 1, **caractérisé en ce que** la plage de tolérance prescrite dépend de la largeur d'impulsion qui est prescrite par le dispositif de commande.

3. Procédé suivant la revendication 2, **caractérisé en ce que**, pour la dépendance de la plage de tolérance en fonction de la largeur d'impulsion prescrite, il est tenu compte des variations de la largeur d'impulsion du circuit de commande jusqu'au moteur.

4. Procédé suivant l'une des revendications précédentes, **caractérisé en ce que** la durée prescrite est prescrite par le dispositif de commande.

5. Procédé suivant l'une des revendications précédentes, **caractérisé en ce que** l'impulsion de porte est asynchrone aux impulsions et a une longueur d'un multiple entier de la période des impulsions.

6. Procédé suivant l'une des revendications 1 à 4, **caractérisé en ce que** l'impulsion de porte est synchrone aux impulsions et a une longueur de plusieurs périodes des impulsions.

7. Dispositif de contrôle de signaux qui sont envoyés par un étage (1) final à un moteur (2) polyphasé et dont la largeur d'impulsion est commandée par un dispositif de commande, dans lequel pour chaque phase il est prévu un compteur (8, 9, 10) cadencé qui mesure la somme des impulsions des signaux dans un temps prescrit indépendant du déroulement du programme dans le dispositif de commande et en ce qu'il est prévu en outre des moyens qui lisent l'état du compteur (8, 9, 10) après le temps prescrit et produisent un signal d'erreur lorsque l'état du compteur se trouve en dehors d'une plage de tolérance prescrite, **caractérisé en ce que** les signaux d'une phase peuvent être envoyés respectivement à un compteur (8, 9, 10) par respectivement un circuit (5, 6, 7) à porte, le circuit (5, 6, 7) à porte étant commandé par une impulsion de porte produite par une horloge (11) d'impulsion de porte dont la largeur correspond au temps prescrit et **en ce que** les compteurs (8, 9, 10) sont cadencés à une fréquence plus haute que la fréquence des signaux et sont libérés par les signaux traversant les circuits (5, 6, 7) à porte ou **en ce que** des entrées de compteur (8910) sont alimentées en les signaux **en ce qu'**une horloge (11) est prévue pour la production d'une impulsion de porte, dont la largeur correspond au temps prescrit et **en ce que** l'impulsion de porte peut être envoyée à d'autres entrées des compteurs (8, 9, 10) pour libérer les compteurs.

8. Dispositif suivant la revendication 7, **caractérisé en ce que** les compteurs (8, 9, 10) et l'horloge (11) forment avec le dispositif (4) de contrôle un circuit intégré.

9. Dispositif suivant l'une des revendications 7 et 8, **caractérisé en ce que** les compteurs (8, 9, 10) sont des compteurs matériels et l'horloge (11) contient un compteur matériel.

10. Dispositif suivant l'une des revendications 7 et 8, **caractérisé en ce que** les compteurs et l'horloge sont formés par un dispositif programmable.

11. Dispositif suivant l'une des revendications 7 et 8, **caractérisé en ce que** les compteurs et l'horloge sont formés par un circuit programmé par masque.

12. Dispositif suivant l'une des revendications 7 à 11, **caractérisé en ce que** en dehors du dispositif de commande est prévu un comparateur qui compare l'état du compteur après le temps prescrit à une plage de tolérance envoyée par le dispositif de commande et, en cas d'écart, transmet un signal d'erreur au dispositif de commande.
